**Europäisches Patentamt**

**European Patent Office**

**Office européen des brevets**

(19)

(11) Veröffentlichungsnummer: **0 123 103 B1**

(12) ## EUROPÄISCHE PATENTSCHRIFT

(45) Veröffentlichungstag der Patentschrift:
**17.02.88**

(21) Anmeldenummer: **84102801.2**

(22) Anmeldetag: **14.03.84**

(51) Int. Cl.⁴: **B 05 B 1/10,** B 05 B 1/24, B 60 S 1/52

(54) Spritzdüse für Scheibenwaschanlagen.

(30) Priorität: **28.03.83 DE 3311266**

(43) Veröffentlichungstag der Anmeldung:
**31.10.84 Patentblatt 84/44**

(45) Bekanntmachung des Hinweises auf die Patenterteilung:
**17.02.88 Patentblatt 88/7**

(84) Benannte Vertragsstaaten:
**DE FR GB IT NL SE**

(56) Entgegenhaltungen:
**DE - A - 2 519 902**
**DE - C - 2 434 491**

(73) Patentinhaber: **Siemens Aktiengesellschaft Berlin und München, Wittelsbacherplatz 2, D-8000 München 2 (DE)**

(72) Erfinder: **Kusuma, Djuanarto-Adi, Bgm. Prell-Strasse 17, D-8620 Lichtenfels (DE)**
Erfinder: **Herold, Georg, Dr., Herzogstrasse 10, D-8620 Lichtenfels-Weingarten (DE)**

## Beschreibung

Die Erfindung betrifft eine Spritzdüse für Scheibenwaschanlagen, insbesondere für Scheiben an Kraftfahrzeugen mit einer Düse und einem Flüssigkeitszuleitungsrohr aus Kunststoff und einem als Heizkörper ausgebildeten Kaltleiter (DE-C-2 434 491).

Es sind Spritzdüsen bekannt, die elektrisch, durch Luft oder durch Abgase beheizt werden. Solche Vorrichtungen arbeiten aber ziemlich träge und die Montage ist meist aufwendig.

Aus der DE-OS 2 909 219 sind Düsen für Frostsicherungsanlagen bekannt, die aus temperaturbeständigem, isolierendem Material (Polytetrafluoräthylen, z.B. Teflon) bestehen und direkt am Schaft mit einer Heizwicklung versehen sind. Gemäss der DE-OS 3 039 663 besteht der Düsenkörper aus thermoplastischem Kunststoff oder einem anderen nichtleitenden Material.

Zur Aufheizung der Waschflüssigkeit ist gemäss der deutschen Offenlegungsschrift 2 442 577 und der deutschen Patentschrift 2 434 491 der Heizkörper als Kaltleiterwiderstand ausgebildet. Spritzdüse und Kaltleiter können mit einem wärmeisolierenden Kunststoffmantel umgeben sein. Der Düsenkörper der Spritzdüse besteht aus Metall (Aluminium).

Bei den bekannten Vorrichtungen ist die Wirkung beim Einschalten verzögert. Infolge der grossen Wärmeableitung bei vorhandenen luftgefüllten Zwischenräumen zwischen Kaltleiter und Aufhängeobjekt ist eine relativ lange Aufheizzeit erforderlich. Es treten insbesondere Verzögerungen beim Auftauen eines Wassertröpfchens an der Spitze der Spritzdüse auf.

Der Erfindung liegt die Aufgabe zugrunde, die Metalldüse oder den Flüssigkeitsaustrittskanal und das Flüssigkeitszuleitungsrohr der Spritzdüse aus Kunststoff für Scheibenwaschanlagen innerhalb kurzer Zeit mittels einer oder mehreren Widerstandsheizungen vornehmlich einem Kaltleiter unmittelbar zu beheizen. Die Montage und Herstellung sollen einfach sein.

Diese Aufgabe wird dadurch gelöst, dass erfindungsgemäss der Kaltleiter in eine Aussparung in der Spritzdüse eingelegt und in einem hochgefüllten, flammfesten, hydrolysebeständigen und gutwärmeleitenden Formstoff eingebettet ist und über diesen Formstoff in unmittelbarer Nähe der Düse oder des Flüssigkeitsaustrittskanals und in direktem Kontakt mit einem Flüssigkeitszuleitungsrohr aus Kunststoff die unmittelbare Beheizung erfolgt.

Bei einer Ausführung gemäss der Erfindung entfallen die bei bisherigen Spritzdüsen erforderlichen Metallrohre und Abdeckteile. Die Montage der Widerstandsheizung in die im Spritzgiessverfahren hergestellten Kunststoffspritzdüse ist einfach. Der Kaltleiter kann in die auf der Spritzdüse vorgesehene Aussparung eingelegt werden und mit einem hochgefüllten, flammfesten, hydrolysebeständigen und wärmeleitenden Formstoff eingegossen oder in diesem eingepresst werden.

Gemäss einer weiteren Ausführungsform ist ein bereits mit einem hochgefüllten, flammfesten, hydrolysebeständigen und wärmeleitenden Formstoff umgossener Kaltleiter in die Spritzgiessform eingelegt und mit Kunststoff umspritzt.

Ein besonderer Vorteil der erfindungsgemässen Ausführung liegt schliesslich darin, dass die Metalldüse entfallen kann. Die Mündung des Flüssigkeitszuleitungsrohres kann nämlich in besonders vorteilhafter Ausführungsweise zu einer Flüssigkeitsaustrittsdüse ausgebildet sein.

Geeignete Formstoffe sind bei Raumtemperatur hochviskose aushärtbare Mischungen von cycloaliphatischen Epoxidharzen und selbstverlöschenden, hydrolysebeständigen und wärmeleitfähigen Füllstoffen wie $Sb_2O_3$, Phosphate, Siliciumcarbid und insbesondere Aluminiumoxyd-Trihydrat. Der Füllstoffgehalt liegt vorzugsweise bei 65 bis 75 Gew.-%, bezogen auf das verwendete Harz.

Ausführungsformen gemäss der Erfindung können verwendet werden in Autowaschanlagen und vor allem in Waschanlagen von Kraftfahrzeugen.

Die Erfindung wird anhand der Zeichnung näher erläutert.

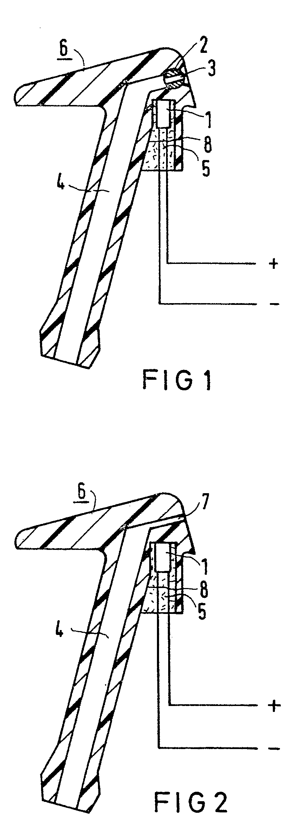

Fig. 1 zeigt in schematischer Darstellung einen Schnitt einer erfindungsgemässen beheizten Spritzdüse 6. Sie enthält eine Düse 2 aus Metall, die in die spritzgegossene Kunststoffspritzdüse 6 mit dem Flüssigkeitszuleitungsrohr 4 eingebracht ist. Mit 3 ist der Flüssigkeitsaustritt bezeichnet. Der Kaltleiter 1 ist in die Aussparung 8 und in den hochgefüllten, flammfesten, hydrolysbeständigen und wärmeleitenden Formstoff 5 eingebettet, der sich in direktem Kontakt mit dem spritzgegossenen Kunststoffteil befindet.

Fig. 2 zeigt einen Schnitt einer beheizten Spritzdüse, die keine separat eingebrachte Metalldüse aufweist. Der Flüssigkeitszuleitungskanal 4 ist zu einer Flüssigkeitsaustrittsdüse 7 ausgebildet.

## Patentansprüche

1. Spritzdüse (6) für Scheibenwaschanlagen insbesondere für Scheiben an Kraftfahrzeugen mit einer Düse (2) und einem Flüssigkeitszuleitungsrohr (4) aus Kunststoff und einem als Heizkörper (1) ausgebildeten Kaltleiter, dadurch gekennzeichnet, dass der Kaltleiter (1) in eine Aussparung (8) in der Spritzdüse eingelegt und in einen hochgefüllten, flammfesten, hydrolysebeständigen und gutwärmeleitenden Formstoff (5) eingebettet ist und über diesen Formstoff in unmittelbarer Nähe der Düse (2) oder des Flüssigkeitsaustrittskanals (3) und in direktem Kontakt mit einem Flüssigkeitszuleitungskanal (4) aus Kunststoff die unmittelbare Beheizung erfolgt.

2. Spritzdüse nach Anspruch 1, dadurch gekennzeichnet, dass der flammfeste, hydrolysebeständige und wärmeleitende Formstoff (5) ein cycloaliphatisches Epoxidharz ist, das als Füllstoff 65 bis 75 Gew.-% Aluminiumoxyd-Trihydrat, bezogen auf das Harz, enthält.

3. Spritzdüse nach Anspruch 1 oder 2, dadurch gekennzeichnet, dass die Düse (2) aus Metall ist.

4. Spritzdüse nach Anspruch 1 oder 2, dadurch gekennzeichnet, dass das Flüssigkeitszuleitungsrohr (4) aus Kunststoff und gleichzeitig als Flüssigkeitsaustrittsdüse (7) ausgebildet ist.

## Claims

1. A spray nozzle (6) for windscreen washer systems, particularly but not exclusively for motor vehicle windscreens, comprising a nozzle (2) and a synthetic resin liquid supply pipe (4) and a cold conductor in the form of a heating body (1), characterised in that the cold conductor (1) is inserted into a recess (8) in the spray nozzle and is embedded in a highly-filled, flame-resistant, hydrolysis-resistant and good heat conducting moulding material (5); and that the direct heating is carried out through this moulding material in the immediate vicinity of the nozzle (2) or the liquid outlet channel (3) and in direct contact with a liquid supply channel (4) of synthetic resin.

2. A spray nozzle as claimed in Claim 1, characterised in that the flame-resistant, hydrolysis-resistant and heat conducting moulding material (5) is a cyclo-aliphatic epoxy resin which contains as filler, 65 to 75 per cent by weight of aluminium oxide trihydrate, with reference to the resin.

3. A spray nozzle as claimed in Claim 1 or 2, characterised in that the nozzle (2) is made of metal.

4. A spray nozzle as claimed in Claim 1 or 2, characterised in that the liquid supply pipe (4) consists of synthetic resin material and simultaneously serves as liquid outlet nozzle (7).

## Revendications

1. Buse de projection (6) d'installations de lavage de vitres, notamment de pare-brise de véhicules automobiles, comprenant une buse (2) et un conduit d'amenée du liquide (4) en matière plastique et une résistance à coefficient de température positif servant d'élément de chauffage (1), caractérisée en ce que la résistance à coefficient de température positif est logée dans un évidement (8) de la buse de projection et est noyée dans une matière moulée (5) ayant beaucoup de matière de charge, résistante au feu, résistante à l'hydrolyse et bonne conductrice de la chaleur et le chauffage s'effectue directement par cette matière moulée à proximité immédiate de la buse (2) ou du conduit de sortie du liquide (3) et en contact direct avec un conduit d'amenée du liquide (4) en matière plastique.

2. Buse de projection selon la revendication 1, caractérisée en ce que la matière moulée (5) résistante au feu, résistante à l'hydrolyse et conductrice de la chaleur est une résine époxydique cycloaliphatique qui contient comme matière de charge d'hydroxyde d'aluminium trihydraté représentant de 65 à 75% du poids de la résine.

3. Buse de projection selon la revendication 1 ou 2, caractérisée en ce que la buse (2) est en métal.

4. Buse de projection selon la revendication 1 ou 2, caractérisée en ce que le conduit d'amenée du liquide (4) est en matière plastique et fait office en même temps de buse de sortie du liquide (7).

FIG 1

FIG 2